# FASCICULE DE BREVET EUROPEEN

(11) **EP 2 492 197 B1**
(45) Date de publication et mention de la délivrance du brevet: **18.06.2014**
(21) Numéro de dépôt: 12000609.3
(22) Date de dépôt: 31.01.2012
(51) Int. Cl.: B64D 11/06, B60N 2/015, B64C 1/20

(54) **Dispositif de fixation, siège muni dudit dispositif et véhicule**
Befestigungsvorrichtung, mit einer solchen Vorrichtung ausgestatteter Sitz und Fahrzeug
Attachment device, seat provided with said device and vehicle

(30) Priorité: 28.02.2011 FR 1100590
(43) Date de publication de la demande: 29.08.2012
(73) Titulaire: Airbus Helicopters, 13725 Marignane Cedex (FR)
(72) Inventeur: Zunino, Eric, 13300 Salon de Provence (FR); Harer, Matthias, 71332 Waiblingen (DE)
(74) Mandataire: Pouillot, Laurent Pierre Paul

(56) Documents cités:
- EP-A1- 1 342 662
- EP-A1- 2 353 926
- GB-A- 2 406 877

## Description

La présente invention concerne un dispositif de fixation, un siège muni dudit dispositif de fixation, et un véhicule.

L'invention se situe notamment dans le domaine technique des dispositifs de fixation d'une charge à un sol, et plus particulièrement aux dispositifs de fixation d'une charge tel qu'un siège à un rail d'aéronef.

On entend par « charge » tout élément susceptible d'être attaché à une structure de manière amovible.

En effet, un siège peut être attaché à la structure d'un aéronef par l'intermédiaire d'un dispositif de fixation coopérant avec un ou plusieurs rails.

Par exemple, les rails utilisés dans le domaine aéronautique ont souvent des sections en forme de C. Un tel rail est muni d'une paroi de fond inférieure ainsi que deux parois latérales prolongées par des ailettes pour définir une glissière. Les ailettes constituent conjointement une paroi supérieure du rail comprenant une succession d'encoches élargies de forme généralement cylindrique et d'encoches rétrécies de forme généralement parallélépipédique.

Pour attacher une charge à un rail, on utilise alors des , dispositifs de fixation coopérant avec le rail.

Le document US 4 062 298 présente un dispositif de fixation muni de patins pouvant être insérés dans les encoches élargies du rail pour atteindre la glissière. On déplace alors les patins de la glissière pour les mettre en coïncidence avec les encoches rétrécies puis on manoeuvre une vis commandant un doigt de blocage. Dès lors, le dispositif de fixation est solidarisé au rail selon l'axe en élévation du rail par interférence de forme entre le patin et les ailettes délimitant les encoches rétrécies.

Le document US 3 377 040 présente un rail agencé sur une poutre ayant une section en forme de 1 coopérant avec un dispositif de fixation.

Ce dispositif de fixation comprend un cadre portant deux verrous pivotant autour d'un axe. Chaque verrou inclut deux patins et un doigt de blocage coopérant avec un levier pour être déplacé selon une direction en élévation.

Le document EP 1 762 490 présente un dispositif de fixation muni d'une embase pourvue de moyens de liaison à un siège, l'embase coopérant avec un unique coulisseau portant des patins. Le dispositif de fixation inclut de plus un levier de manoeuvre articulé sur l'embase et le coulisseau pour déplacer ce coulisseau d'une position d'ouverture à une position de blocage. En outre, un moyen de verrouillage verrouille le levier de manoeuvre dans une position de fermeture.

Par ailleurs, on note que l'arrière plan technologique inclut notamment les documents FR 2 930 202 et FR 2 817 596.

Par exemple, le document FR 2 930 202 décrit un mécanisme d'ancrage coopérant avec un rail pourvu de fils d'ancrage.

Le document FR 2 817 596 présente un système de fixation à billes pour fixer un support à un plancher.

Le document GB 2 406 877 décrit un dispositif de fixation d'une charge à un rail selon le préambule de la revendication 1, ledit dispositif étant muni d'une embase et deux coulisseaux porteurs de patins. Les coulisseaux sont mobiles dans des sens antagonistes.

Le document EP 2 353 926 présente un dispositif de fixation muni d'un corps allongé qui comprend une partie non mobile et une partie mobile. Le document EP 1 342 662 propose un dispositif de fixation comprenant une pièce mobile coulissant par rapport à une pièce fixe et d'une molette de blocage verrouillant un ergot dans un rail.

On comprend qu'il peut être délicat, pour un individu non qualifié tel qu'un passager assis sur un siège d'un aéronef, de manoeuvrer un dispositif de fixation inconnu.

Dès lors, la présente invention a pour objet de proposer un dispositif de fixation permettant à un individu non qualifié de fixer une charge à un rail, par exemple un siège afin que l'occupant de ce siège puisse le déplacer d'une première position vers une deuxième position pour améliorer son confort.

Selon l'invention, un dispositif de fixation d'une charge à un rail muni d'une glissière délimitée par une paroi inférieure, deux parois latérales et une paroi supérieure comportant une succession d'encoches élargies et d'encoches rétrécies, comporte une embase et deux patins aptes à être insérés dans lesdites encoches élargies pour atteindre la glissière et à coopérer par interférence de forme avec la paroi supérieure au niveau d'une encoche rétrécie pour bloquer le dispositif de fixation selon une direction en élévation.

Ce dispositif de fixation est notamment remarquable en ce qu'il comporte :
- un premier coulisseau et un deuxième coulisseau qui sont agencés respectivement sur un premier arbre de coulissement et un deuxième arbre de coulissement de ladite embase, chaque coulisseau comportant un des deux patins pour bloquer en élévation le dispositif par interférence de forme avec la paroi supérieure,
- un moyen d'écartement des premier et deuxième coulisseaux pour déplacer longitudinalement les premier et deuxième coulisseaux dans des sens antagonistes,
- un moyen de détection d'un rail commandant automatiquement le moyen d'écartement pour déplacer chaque coulisseau d'une position d'ouverture pour laquelle une encoche élargie est à l'aplomb du coulisseau vers une position de verrouillage pour laquelle une encoche rétrécie est à l'aplomb du coulisseau,
- un moyen de rapprochement des premier et deuxième coulisseaux pour déplacer chaque coulisseau d'une position de verrouillage vers une position d'ouverture, et
- un moyen de blocage longitudinal de ladite embase.

Ainsi, le dispositif de fixation est dans une position d'ouverture préalablement à son insertion dans le rail. On présente alors ce dispositif de fixation sur le rail, les patins étant en vis-à-vis d'encoches élargies, par exemple deux encoches élargies adjacentes séparées de fait par une encoche rétrécie.

Par suite, on enfonce le dispositif de fixation dans le rail selon une direction en élévation, chaque patin pénétrant dans la glissière du rail via une encoche élargie. Lorsque le moyen de détection du rail détecte cette insertion par interférence de forme avec la paroi supérieure par exemple, le moyen de détection permet au moyen d'écartement de déplacer automatiquement le premier coulisseau et le deuxième coulisseau et donc les patins, à savoir sans intervention humaine. Une encoche rétrécie se trouve alors à l'aplomb de chaque patin. Le dispositif de fixation est donc bloqué selon la direction en élévation par une interférence de forme entre chaque patin et la portion de la paroi supérieure délimitant cette encoche rétrécie, plus précisément avec la face interne de la paroi supérieure en regard de la glissière.

On note que ce blocage n'implique pas le déplacement manuel des patins.

De plus, chaque patin étant alors disposé dans la glissière du rail, le dispositif de fixation est aussi bloqué selon une direction transversale passant par les parois latérales du rail.

Enfin, un moyen de blocage de l'embase bloque longitudinalement le dispositif de fixation.

Par conséquent, le dispositif de fixation coopère automatiquement avec le rail en ne nécessitant pas l'intervention d'un opérateur. Il suffit de pousser le dispositif de fixation pour insérer les patins dans la glissière du rail afin de le solidariser à ce rail.

A l'inverse, pour enlever le dispositif de fixation, on manoeuvre le moyen de rapprochement pour positionner les premier et deuxième coulisseaux dans une position d'ouverture. En tirant sur le dispositif de fixation, on désolidarise alors ce dispositif de fixation du rail sans effort.

Le dispositif peut comporter une ou plusieurs des caractéristiques qui suivent selon la variante.

Par exemple, le moyen d'écartement peut inclure un moyen élastique interposé entre le premier coulisseau et le deuxième coulisseau. Selon une réalisation, le moyen élastique comprend deux ressorts répartis transversalement de part et d'autre du support. Toutefois, d'autres moyens élastiques sont envisageables.

Selon un autre aspect, le moyen de rapprochement comprend éventuellement une gaine en appui sur une première surface d'arrêt du premier coulisseau et un câble traversant cette gaine ayant une extrémité d'arrêt en contact contre une deuxième surface d'arrêt du deuxième coulisseau, le câble étant relié à un actionneur.

En tirant sur le câble à l'aide d'un actionneur, on rapproche alors le premier coulisseau et le deuxième coulisseau l'un de l'autre. L'actionneur peut être une manette aisément manoeuvrable par un individu non qualifié.

Par ailleurs, selon une première variante, le moyen de blocage est une semelle solidaire de l'embase. La semelle inclut deux éléments bloquant engagés dans la paroi supérieure dans deux encoches élargies adjacentes lorsque le dispositif de fixation est agencé sur le rail, la semelle ayant optionnellement un moyen de liaison conformé à la forme des encoches rétrécies entre les deux éléments bloquants.

Selon une deuxième variante, le moyen de blocage est une semelle du type décrit précédemment par exemple fixée à l'embase par un moyen de mobilité en élévation, deux axes traversant des orifices en élévation du support par exemple.

Ainsi, lorsque le dispositif de fixation est solidarisé au rail selon une direction en élévation, il demeure possible de déplacer longitudinalement ce dispositif de fixation. En effet, en enfonçant la semelle dans la glissière, on désengage la semelle de la paroi supérieure. On peut alors déplacer le dispositif de fixation.

Indépendamment de la variante, la semelle comporte un moyen d'amortissement pour éviter la transmission de vibrations du rail vers le dispositif de fixation, par exemple un bloc d'élastomère disposé entre deux éléments bloquants de la semelle.

Par ailleurs, le moyen de détection peut comprendre un organe mobile en élévation muni d'au moins un doigt de détection ainsi que d'une part d'un premier cavalier à l'aplomb du premier arbre de coulissement qui est apte à bloquer par interférence de forme le premier coulisseau dans une position ouverte et, d'autre part d'un deuxième cavalier à l'aplomb du deuxième arbre de coulissement qui est apte à bloquer par interférence de forme le deuxième coulisseau dans la position d'ouverture.

Ainsi, quand le doigt de détection touche la paroi supérieure du rail, les patins des premier et deuxième coulisseaux sont insérés dans la glissière. Le contact entre le rail et le doigt de détection induit une translation de l'organe mobile par rapport au support.

Par suite, chaque cavalier libère le coulisseau associé. Il en résulte un déplacement antagoniste automatique des premier et deuxième coulisseaux provoqué par le moyen d'écartement sur ordre du moyen de détection.

Il est à noter que l'on entend par cavalier une pièce métallique en forme de U, la concavité de chaque cavalier étant en regard de l'arbre de coulissement associé.

Selon une réalisation le premier cavalier est relié au deuxième cavalier par deux renforts latéraux longitudinaux, chaque doigt de détection saillant en élévation d'un renfort latéral et coopérant avec un guide de l'embase.

Selon un autre aspect, le moyen de détection comprend au moins un organe élastique coopérant avec l'organe mobile tendant à rapprocher chaque cavalier d'un arbre de coulissement.

Un tel organe élastique peut être interposé entre l'organe mobile et un organe de soutien solidarisé à l'embase.

L'organe de soutien peut être une partie de l'embase ou un adaptateur fixé à cette embase.

Par ailleurs, chaque arbre de coulissement peut comprendre un moyen d'arrêt du coulisseau associé.

En outre, le dispositif de fixation comprend éventuellement un moyen de guidage de l'embase apte à être fixé au rail pour déplacer l'embase d'une première zone de fixation vers une deuxième zone de fixation, tel qu'un moyen de guidage muni de bras fixés au rail et articulés à l'embase. On note que le moyen de guidage peut représenter un moyen de blocage longitudinal du dispositif de fixation.

On comprend que ce dispositif de fixation peut permettre l'ancrage de toutes charges à un rail, et plus particulièrement un siège.

L'invention vise alors notamment un siège muni d'un pied comprenant un dispositif de fixation du type décrit précédemment.

De plus, l'invention vise aussi un véhicule comportant un siège fixé à un rail par au moins un dispositif de fixation du type décrit précédemment.

L'invention et ses avantages apparaîtront avec plus de détails dans le cadre de la description qui suit avec des exemples de réalisation donnés à titre illustratif en référence aux figures annexées qui représentent :
- la figure 1, une vue isométrique d'un véhicule selon l'invention,
- la figure 2, une vue éclatée montrant un dispositif de fixation,
- les figures 3 et 4, des vues montrant le dispositif de fixation dans une position verrouillée et dans une position ouverte,
- les figures 5 à 7, des coupes explicitant le fonctionnement de l'invention, et
- les figures 8 et 9 des vues montrant une variante de l'invention.

Les éléments présents dans plusieurs figures distinctes sont affectés d'une seule et même référence.

On note que trois directions X, Y et Z orthogonales les unes par rapport aux autres sont représentées sur certaines figures.

La première direction X est dite longitudinale. Le terme « longitudinal » est relatif à toute direction parallèle à la première direction X.

La deuxième direction Y est dite transversale. Le terme « transversal » est relatif à toute direction parallèle à la deuxième direction Y.

Enfin, la troisième direction Z est dite en élévation. L'expression « en élévation » est relative à toute direction parallèle à la troisième direction Z.

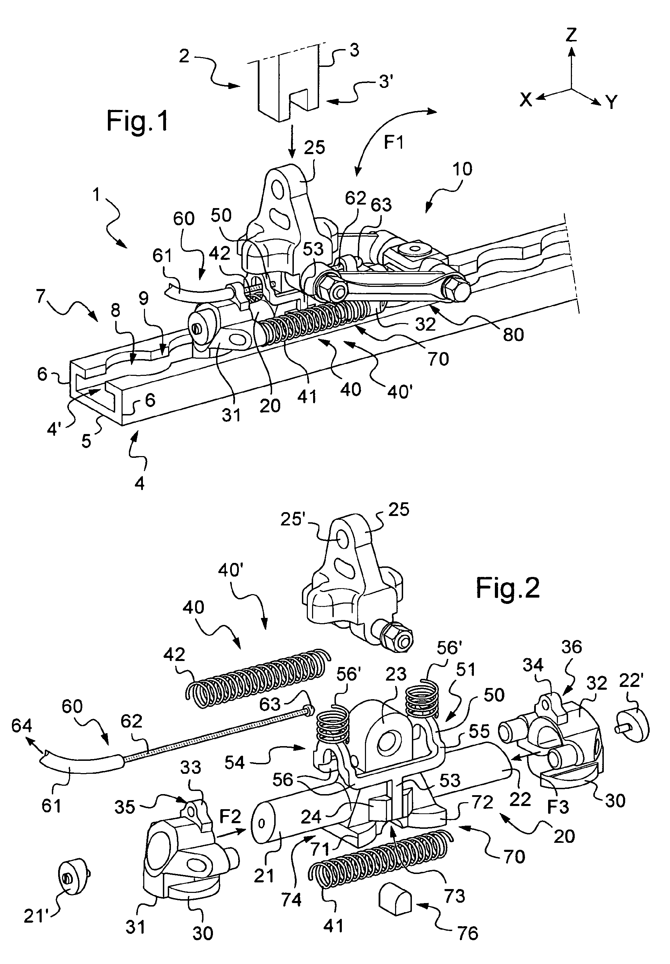

La figure 1 présente un véhicule 1 muni d'un siège 2, le siège 2 comportant au moins un pied 3. Le véhicule 1 et le siège 2 ne sont pas représentés dans leur totalité pour simplifier la figure et ne pas l'alourdir de détails ne concernant pas nécessairement l'invention.

Le pied 3 comprend un moyen de fixation 3', une chape par exemple, pour être fixé à un ensemble de fixation comprenant un rail 4 coopérant avec un dispositif de fixation 10.

Le rail 4 est un rail notamment utilisé dans le cadre de véhicules de type aéronef. Ce rail inclut alors une glissière 4' délimitée par une paroi inférieure 5 de fond s'étendant longitudinalement et transversalement, deux parois latérales 6 s'étendant longitudinalement et en élévation ainsi qu'une paroi supérieure 7 s'étendant longitudinalement et transversalement.

Pour permettre l'insertion du dispositif de fixation 10 dans la glissière 4', la paroi supérieure 7 comprend une succession d'encoches élargies 8 par exemple de forme cylindrique à base circulaire et d'encoches rétrécies 9 par exemple de forme parallélépipédique, une encoche rétrécie étant disposée entre deux encoches élargies adjacentes.

Le dispositif de fixation 10 selon l'invention autorisant la fixation d'une charge, telle que le pied 3 d'un siège au rail 4, comprend alors une embase 20. Cette embase 20 porte un premier coulisseau 31 et un deuxième coulisseau 32 aptes à coulisser longitudinalement le long respectivement d'un premier arbre de coulissement et d'un deuxième arbre de coulissement de l'embase 20. Chaque coulisseau possède alors un patin non visible sur la figure 1 conformé à la forme des encoches élargies 8 par exemple, afin que chaque patin puisse d'une part traverser une encoche élargie 8 et d'autre part coopérer par interférence de forme avec la paroi supérieure au niveau d'une encoche rétrécie 9 pour bloquer le dispositif de fixation en élévation dans le rail 4.

De plus, le dispositif de fixation 10 inclut un moyen d'écartement 40 pour déplacer le premier coulisseau 31 et le deuxième coulisseau 32 selon des sens antagonistes d'une position d'ouverture pour laquelle une encoche élargie 8 est à l'aplomb de chaque coulisseau 31, 32 vers une position de verrouillage pour laquelle une encoche rétrécie 9 est à l'aplomb chaque coulisseau 31, 32. Le moyen d'écartement 40 peut comprendre un moyen élastique 40' muni de deux ressorts 41, 42 solidarisés chacun au premier coulisseau 31 et au deuxième coulisseau 32, ces ressorts s'étendant longitudinalement et étant disposés transversalement de part et d'autre de l'embase 20.

Le moyen d'écartement 40 est en outre commandé automatiquement, à savoir mis en action, par un moyen de détection 50 du rail 4.

En effet, lorsque le dispositif de fixation est en dehors du rail 4, le premier coulisseau 31 et le deuxième coulisseau 32 se trouvent dans la position d'ouverture. Par contre, lorsque les patins du premier coulisseau 31 et du deuxième coulisseau 32 sont agencés dans la glissière 4', le moyen de détection détecte le rail 4 et notamment sa paroi supérieure 7. Par suite, le moyen de détection 50 libère le premier coulisseau 31 et le deuxième coulisseau 32 afin que le moyen d'écartement 40 place ce premier coulisseau 31 et ce deuxième coulisseau 32 dans leurs positions de verrouillage.

Ce moyen de détection 50 est éventuellement muni d'un organe mobile 51 apte à être temporairement en prise avec le premier coulisseau 31 et le deuxième coulisseau 32 pour les bloquer dans leur position d'ouverture. L'organe mobile 51 peut alors comprendre un doigt de détection 53 requérant une translation de l'organe mobile 51 par rapport à l'embase lors d'un contact avec la paroi supérieure 7. L'organe mobile 51 peut coopérer avec un organe élastique non visible sur la figure 1 l'organe élastique étant interposé entre cet organe mobile 51 et un organe de soutien 25 solidaire de l'embase 20.

Cet organe de soutien peut aussi comprendre une articulation pour être fixé à la charge munie du dispositif de fixation 10, en l'occurrence au pied 3 d'un siège sur l'exemple représenté.

A l'inverse, pour permettre la désolidarisation du dispositif de fixation 10 et du rail 4, ce dispositif de fixation 10 est pourvu d'un moyen de rapprochement 60 du premier coulisseau 31 et du deuxième coulisseau 32. Ce moyen de rapprochement peut inclure une gaine 61 et un câble 62 ayant une extrémité d'arrêt 63.

En tirant sur le câble 62, on requiert le déplacement du premier coulisseau 31 et du deuxième coulisseau 32 de leurs positions de verrouillage vers leurs positions d'ouverture.

Par ailleurs, on comprend que les patins du premier coulisseau 31 et du deuxième coulisseau 32 permettent d'une part un blocage du dispositif de fixation 10 dans le rail 4 selon une direction en élévation Z par interférence de forme avec la paroi supérieure 7, mais aussi d'autre part un blocage selon une direction transversale Y en étant coincés entre les deux parois latérales 6 du rail 4.

Dès lors, pour permettre le blocage du dispositif de fixation 10 dans le rail 4 selon une direction longitudinale X, ce dispositif de fixation inclut un moyen de blocage 70 longitudinal.

Ce moyen de blocage 70 peut inclure une semelle non visible sur la figure 1 ou encore un moyen de guidage 80 de l'embase 20. Un tel moyen de guidage 80 comprend par exemple deux bras articulés à l'embase 20 et à un pion de fixation du rail 4.

Le moyen de guidage bloque ainsi longitudinalement le dispositif de fixation lorsque les patins sont en position verrouillée. Par contre, lorsque les patins sont dans en position d'ouverture, le moyen de guidage permet de guider une rotation du dispositif de fixation selon la flèche F1 d'une première position sur le rail 4 vers une deuxième position.

La figure 2 présente une vue éclatée montrant un dispositif de fixation selon une réalisation préférée.

L'embase 20 du dispositif de fixation 10 comprend un corps 23 central. Un premier arbre de coulissement 21 et un deuxième arbre de coulissement 22 s'étendent longitudinalement selon deux sens opposés à partir du corps 23.

Dès lors, un premier coulisseau 31 muni d'un patin 30 est engagé sur le premier arbre de coulissement 21, un premier moyen d'arrêt 21' étant vissé à l'extrémité libre du premier arbre de coulissement 21 pour maintenir le premier coulisseau 31 sur le premier arbre de coulissement 21. De même, un deuxième coulisseau 32 muni d'un patin 30 est engagé sur le deuxième arbre de coulissement 22, un deuxième moyen d'arrêt 22' étant vissé à l'extrémité libre du deuxième arbre de coulissement 22 pour maintenir le deuxième coulisseau 32 sur le deuxième arbre de coulissement 22. Chaque patin est conformé à la forme d'une encoche élargie de manière à d'une part pouvoir traverser cette encoche élargie et, d'autre part à ne pas pouvoir traverser une encoche rétrécie.

Chaque coulisseau peut alors se déplacer longitudinalement sur l'arbre de coulissement associé, d'une position extrême dite d'ouverture à proximité du corps 23 vers une position extrême dite de verrouillage contre le moyen d'arrêt associé.

En outre, un moyen d'écartement 40 comprend un moyen élastique 40' interposé entre le premier coulisseau 31 et le deuxième coulisseau 32. Ce moyen élastique possède par exemple deux ressorts 41, 42, chaque ressort étant en prise sur le premier coulisseau 31 et le deuxième coulisseau 32.

Pour permettre le déplacement du premier coulisseau 31 et du deuxième coulisseau 32 de la position d'ouverture vers la position de verrouillage dans des conditions prédéterminées à savoir lorsque les patins sont dans la glissière d'un rail, le dispositif de fixation 1 comprend un moyen de détection 50.

Ce moyen de détection 50 inclut un organe mobile 51 muni d'au moins un doigt de détection 53 coopérant avec un guide 24 du corps 23 central de l'embase 20.

De plus, ce doigt de détection 53 coopère avec un premier cavalier 54 et un deuxième cavalier 55 de l'organe mobile 51. Chaque cavalier 54, 55 présente une portion cintrée reliée à deux branches latérales.

En effet, l'organe mobile 51 est pourvu d'un premier cavalier 54 s'étendant en élévation à l'aplomb du premier arbre de coulissement 21 et d'un deuxième cavalier s'étendant en élévation à l'aplomb du deuxième arbre de coulissement 22, les branches latérales du premier cavalier 54 et du deuxième cavalier 55 étant reliées par des renforts latéraux 56 s'étendant longitudinalement.

Ainsi, l'organe mobile comporte avantageusement deux doigts de détection 53 s'étendant en élévation à partir de chaque renfort latéral 56 de part et d'autre du corps 23.

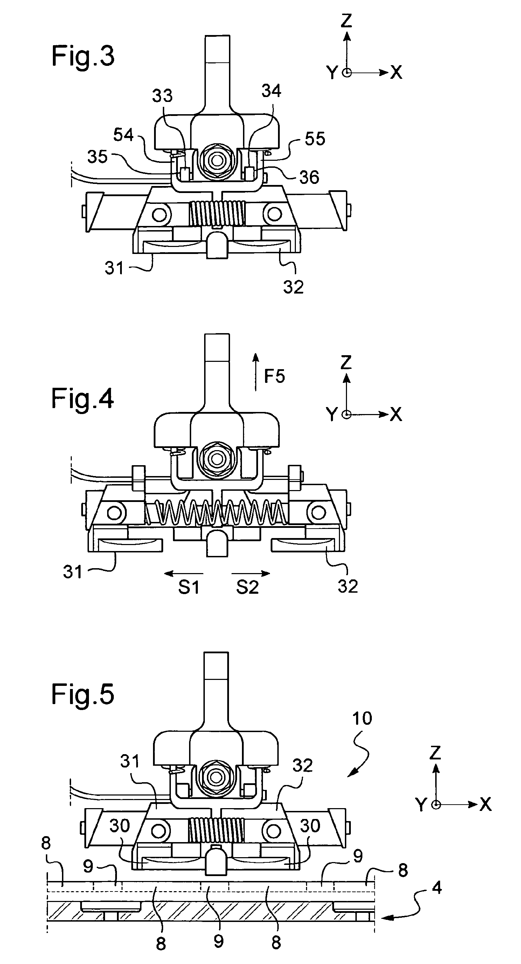

En référence à la figure 3, dans une position basse en élévation, le premier cavalier 54 peut alors bloquer par interférence de forme une première surface d'arrêt 35 d'une première protubérance en élévation 33 du premier coulisseau 31, le deuxième cavalier 55 pouvant bloquer par interférence de forme une deuxième surface d'arrêt 36 d'une deuxième protubérance en élévation 34 du deuxième coulisseau 32. Le premier coulisseau 31 et le deuxième coulisseau 32 sont dans une position d'ouverture leur permettant soit d'être insérés dans un rail soit d'être extraits hors d'un rail.

Par contre, en référence à la figure 4, lorsque l'on insère le dispositif de fixation dans un rail, au fur et à mesure de l'enfoncement de ce dispositif de fixation, le doigt de détection entre en contact avec la paroi supérieure du rail. Il en résulte une translation de l'organe mobile par rapport à l'embase d'une position basse en élévation vers une position haute en élévation selon la flèche F5. Cette translation permet de libérer le premier coulisseau 31 et le deuxième coulisseau qui se déplacent selon des sens antagonistes S1, S2.

Dès lors, le moyen de détection 50 possède un organe élastique 56' tendant à maintenir l'organe mobile dans la position basse en élévation lorsque le dispositif de fixation est en position d'ouverture.

Cet organe élastique 56' est interposé entre l'organe mobile 51 et un élément solidaire du corps 23, tel qu'un organe de soutien 25 pouvant être fixé à ce corps 23 par des moyens usuels. Par exemple, l'organe élastique 56' inclut deux ressorts reliant la portion cintrée de chaque cavalier 54, 55 à l'organe de soutien 25.

On note que cet organe de soutien peut comprendre un moyen de liaison 25' à la charge devant être fixé à un rail.

Par ailleurs, le dispositif de fixation 10 comprend un moyen de rapprochement 60 muni d'une gaine 61 en contact avec la première surface d'arrêt du premier coulisseau 31.

De plus, le moyen de rapprochement est muni d'un câble 62 traversant la gaine 61, la première protubérance 33, le corps 23 puis la deuxième protubérance 34. Une extrémité d'arrêt 63 du câble 62 est alors en contact avec la deuxième surface d'arrêt 36. Le câble peut être manoeuvré à l'aide d'un moyen de manoeuvre 64.

Si une charge comporte plusieurs dispositifs de fixation, l'ensemble des câbles est relié avantageusement à un même moyen de manoeuvre.

Selon un autre aspect, un moyen de blocage 70 longitudinal inclut une semelle 74.

Cette semelle 74 comprend deux éléments bloquants 71, 72 pouvant être engagés dans la paroi supérieure d'un rail dans deux encoches élargies adjacentes lorsque le dispositif de fixation est agencé sur le rail. De plus, cette semelle comprend un moyen de liaison 73 conformé à la forme des encoches rétrécies entre les deux éléments bloquants.

Conformément à la figure 2, cette semelle 74 peut être solidaire de l'embase selon des directions longitudinale, transversale et en élévation.

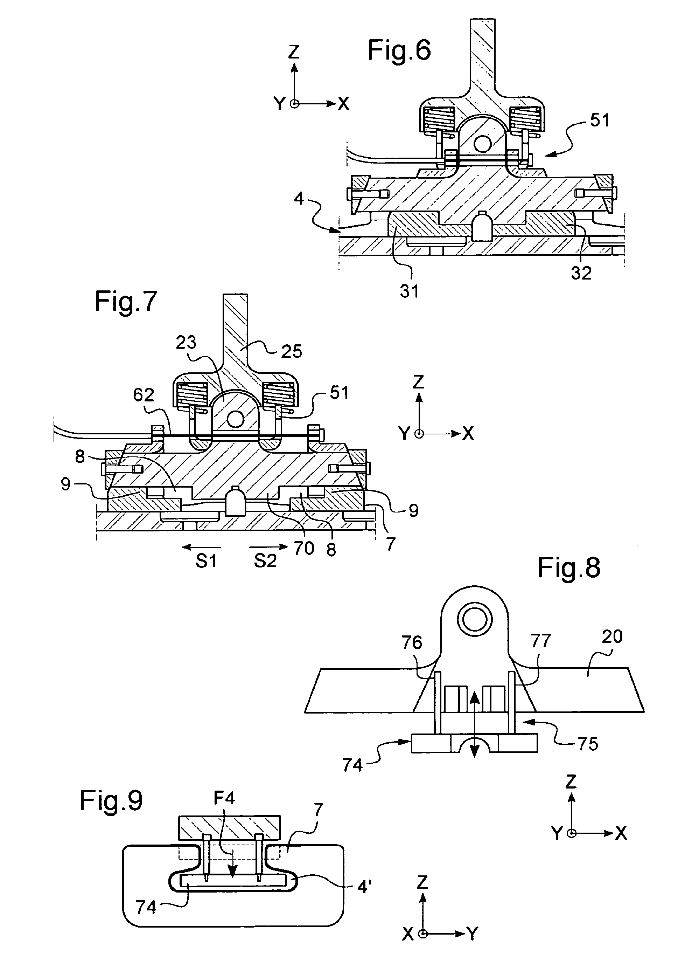

Par contre selon la variante décrite sur la figure 8, la semelle 74 est fixée à l'embase 20 par un moyen de mobilité en élévation 75. Ce moyen de mobilité peut comprendre deux axes 76, 77 coopérant avec deux orifices de l'embase 20, et commandés par un moteur électrique ou manuellement par exemple.

En référence à la figure 9, pour déplacer longitudinalement le dispositif de fixation 10, on enfonce la semelle 74 dans la glissière 4' selon la flèche F4. Cette semelle ne bloque alors plus le dispositif de fixation 10 par interférence de forme avec la paroi supérieure 7.

Il est alors possible de faire coulisser le dispositif de fixation pour choisir librement sa position.

En référence à la figure 2, la semelle 74 est équipée d'un moyen d'amortissement 76, ce moyen d'amortissement 76 pouvant être enserré entre le moyen de liaison 72 de la semelle et la paroi inférieure 5 d'un rail par exemple.

Les figures 5 à 7 explicitent le fonctionnement du dispositif de fixation 10.

En référence à la figure 5, en dehors du rail 4, le dispositif de fixation 10 est dans une position d'ouverture. La distance séparant le premier patin 30 du premier coulisseau 31 et le deuxième patin 30 du deuxième coulisseau 32 est minimale, cette distance étant sensiblement égale à la longueur d'une encoche rétrécie 9.

En référence à la figure 6, on insère alors le dispositif de fixation dans le rail 4, les patins du premier coulisseau 31 et du deuxième coulisseau 32 pénétrant dans le rail 4 par deux encoches élargies 8 adjacentes.

Au fur et à mesure de l'enfoncement du dispositif de fixation 10, les doigts de détection de l'organe mobile entrent en contact avec la paroi supérieure du rail 4. L'organe mobile effectue une translation en élévation par rapport à l'embase 20.

En référence à la figure 7, à partir d'un déplacement donné, l'organe mobile 51 ne retient plus le premier coulisseau 31 et le deuxième coulisseau 32 qui s'écartent selon les flèches S1, S2.

Les patins du premier coulisseau 31 et du deuxième coulisseau 32 ne sont plus en regard d'encoches élargies, des encoches rétrécies étant désormais à l'aplomb desdits patins. Le dispositif de fixation se trouve dans une position verrouillée, ce dispositif de fixation étant alors bloqué en élévation.

On note que la semelle 74 bloque le dispositif de fixation longitudinalement en coopérant avec la paroi supérieure 7.

Pour déconnecter le dispositif de fixation 10 du rail 4, on rapproche le premier coulisseau 31 et le deuxième coulisseau 32 du corps 23 à l'aide du câble 62 pour retourner dans la position ouverte visible sur la figure 6.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Notamment, la figure 1 suggère d'utiliser les dispositifs de fixation pour fixer un siège à un rail. Toutefois, le dispositif de fixation peut permettre l'arrimage de charges diverses, du fret par exemple.

## Revendications

1. Dispositif de fixation (10) d'une charge à un rail (4) muni d'une glissière (4') délimitée par une paroi inférieure (5), deux parois latérales (6) et une paroi supérieure (7) comportant une succession d'encoches élargies (8) et d'encoches rétrécies (9), ledit dispositif de fixation (10) comportant une embase (20) et deux patins (30) aptes à être insérés dans lesdites encoches élargies (8) et à coopérer par interférence de forme avec la paroi supérieure (7) au niveau d'une encoche rétrécie (9), ledit dispositif de fixation ayant :
- un premier coulisseau (31) et un deuxième coulisseau (32), chaque coulisseau (31, 32) comportant un desdits deux patins (30) pour bloquer en élévation ledit dispositif de fixation (10) par interférence de forme avec ladite paroi supérieure (7),
- un moyen d'écartement (40) desdits premier et deuxième coulisseaux (31, 32) pour déplacer longitudinalement lesdits premier et deuxième coulisseaux (31, 32) dans des sens antagonistes (S1, S2),
- un moyen de rapprochement (60) desdits premier et deuxième coulisseaux (31, 32) pour déplacer chaque coulisseau (31, 32) de la position de verrouillage vers la position d'ouverture, et
- un moyen de blocage (70) longitudinal de ladite embase (20),
**caractérisé en ce qu'**il comporte :
- un premier arbre de coulissement (21) et un deuxième arbre de coulissement (22) de ladite embase, le premier coulisseau (31) et le deuxième coulisseau (32) étant agencés respectivement sur le premier arbre de coulissement (21) et le deuxième arbre de coulissement (22) de ladite embase (20),
- un moyen de détection (50) d'un rail (4) commandant automatiquement le moyen d'écartement (40) pour déplacer chaque coulisseau (31, 32) d'une position d'ouverture pour laquelle une encoche élargie (8) est à l'aplomb dudit coulisseau (31, 32) vers une position de verrouillage pour laquelle une encoche rétrécie (9) est à l'aplomb dudit coulisseau (31, 32).

2. Dispositif selon la revendication 1 **caractérisé en ce que** ledit moyen d'écartement (40) est un moyen élastique (41, 42) interposé entre le premier coulisseau (31) et le deuxième coulisseau (32).

3. Dispositif selon l'une quelconque des revendications 1 à 2, **caractérisé en ce que** ledit moyen de rapprochement (60) comprend une gaine (61) en appui sur une première surface d'arrêt (35) du premier coulisseau (31) et un câble (62) traversant ladite gaine (61) ayant une extrémité d'arrêt (63) en contact contre une deuxième surface d'arrêt (36) du deuxième coulisseau (32), ledit câble (62) étant relié à un actionneur (64).

4. Dispositif selon l'une quelconque des revendications 1 à 3, **caractérisé en ce que** ledit moyen de blocage (70) est une semelle (74) solidaire de ladite embase (20).

5. Dispositif selon l'une quelconque des revendications 1 à 3,
**caractérisé en ce que** ledit moyen de blocage (70) est une semelle (74) fixée à ladite embase (20) par un moyen de mobilité en élévation (75).

6. Dispositif selon l'une quelconque des revendications 4 à 5,
**caractérisé en ce que** ladite semelle (74) comporte un moyen d'amortissement (76).

7. Dispositif selon l'une quelconque des revendications 1 à 6,
**caractérisé en ce que** ledit moyen de détection (50) comprend un organe mobile (51) en élévation muni d'au moins un doigt de détection (53) ainsi que d'une part d'un premier cavalier (54) à l'aplomb du premier arbre de coulissement (21) qui est apte à bloquer par interférence de forme le premier coulisseau (31) dans la position ouverte et, d'autre part d'un deuxième cavalier (55) à l'aplomb du deuxième arbre de coulissement (22) qui est apte à bloquer par interférence de forme le deuxième coulisseau (32) dans ladite position ouverte.

8. Dispositif selon la revendication 7,
**caractérisé en ce que** ledit premier cavalier (54) est relié au deuxième cavalier (55) par deux renforts latéraux (56) longitudinaux, ledit doigt de détection (53) saillant en élévation d'un renfort latéral (56) et coopérant avec un guide (24) de ladite embase (20).

9. Dispositif selon l'une quelconque des revendications 7 à 8,
**caractérisé en ce que** ledit moyen de détection (50) comprend au moins un organe élastique (56') coopérant avec ledit organe mobile (51) tendant à rapprocher chaque cavalier (54, 55) d'un desdits arbre de coulissement (21, 22).

10. Dispositif selon la revendication 9,
**caractérisé en ce que** ledit organe élastique (56') est interposé entre ledit organe mobile (51) et un organe de soutien (25) solidarisé à l'embase (20).

11. Dispositif selon l'une quelconque des revendications 1 à 10,
**caractérisé en ce que** chaque arbre de coulissement (21, 22) comprend un moyen d'arrêt (21', 22') du coulisseau (31, 32) associé.

12. Dispositif selon l'une quelconque des revendications 1 à 11,
**caractérisé en ce qu'**il comprend un moyen de guidage (80) de l'embase (20) apte à être fixé au rail (4) pour déplacer ladite embase (20) d'une première zone de fixation vers une deuxième zone de fixation.

13. Siège (2) muni d'au moins un pied (3),
**caractérisé en ce que** ledit pied (3) comprend un dispositif de fixation (10) selon l'une quelconque des revendications précédentes.

14. Véhicule (1),
**caractérisé en ce qu'**il comporte un siège (2) fixé à un rail (4) par au moins un dispositif de fixation (10) selon l'une quelconque des revendications 1 à 13.

## Patentansprüche

1. Befestigungsvorrichtung (10) einer Last an einer Schiene (4), die mit einer Gleitführung (4') versehen ist, die begrenzt ist durch eine untere Wand (5), zwei Seitenwände (6) und eine obere Wand (7), die eine Folge von verbreiterten Rasten (8) und verengten Rasten (9) aufweist, wobei die Befestigungsvorrichtung (10) ein Unterteil (20) und zwei Kufen (30) aufweist, die in die verbreiterten Rasten (8) eingeführt werden können und die durch Formschluss mit der oberen Wand (7) auf der Höhe einer verengten Raste (9) zusammenwirken kann, wobei die Befestigungsvorrichtung aufweist:
- einen ersten Schienengleiter (31) und einen zweiten Schienengleiter (32), wobei jeder Schienengleiter (31, 32) eine der beiden Kufen (30) aufweist, um die Befestigungsvorrichtung (10) durch Formschluss mit der oberen Wand (7) nach oben zu blockieren,
- ein Mittel (40) zum Spreizen des ersten und des zweiten Schienengleiters (31, 32), um den ersten und den zweiten Schienengleiter (31, 32) in entgegengesetzte Richtungen (S1, S2) längs zu bewegen,
- ein Mittel (60) zur Annäherung des ersten und des zweiten Schienengleiters (31, 32) zueinander, um jeden Schienengleiter (31, 32) aus der Vernegelungsstellung in die Öffnungsstellung zu bewegen und
- ein Längsblockiermittel (70) des Unterteils (20),
**dadurch gekennzeichnet, dass** die Befestigungsvorrichtung aufweist:
- einen ersten Gleitarm (21) und einen zweiten Gleitarm (22) des Unterteils, wobei der erste Schienengleiter (31) und der zweite Schienengleiter (32) jeweils auf dem ersten Gleitarm (21) und dem zweiten Gleitarm (22) des Unterteils (20) angeordnet sind,
- ein Mittel (50) zur Erfassung einer Schiene (4), welches automatisch das Spreizmittel (40) steuert, um jeden Schienengleiter (31, 32) aus einer Offenstellung, in der eine erweiterte Raste (8) mit dem Schienengleiter (31, 32) im Lot ist, in eine Verriegelungsstellung zu bewegen, in der eine verengte Raste (9) mit dem Schienengleiter (31, 32) im Lot ist.

2. Vorrichtung nach Anspruch 1,
**dadurch gekennzeichnet, dass** das Spreizmittel (40) ein elastisches Mittel (41, 42) ist, welches zwischen dem ersten Schienengleiter (31) und dem zweiten Schienengleiter (32) angeordnet ist.

3. Vorrichtung nach einem der Ansprüche 1 bis 2,
**dadurch gekennzeichnet, dass** das Annäherungsmittel (60) eine Hülse (61) aufweist, die gegen eine erste Stopperfläche (35) des ersten Schienengleiters (31) anliegt, und ein Kabel (62) aufweist, das die Hülse (61) durchquert und ein Stopperende (63) aufweist, welches mit einer zweiten Stopperfläche (36) des zweiten Schienengleiters (32) in Kontakt steht, wobei das Kabel (62) mit einem Betätigungsglied (64) verbunden ist.

4. Vorrichtung nach einem der Ansprüche 1 bis 3,
**dadurch gekennzeichnet, dass** das Blockiermittel (70) eine Platte (74) ist, die mit dem Unterteil (20) fest verbunden ist.

5. Vorrichtung nach einem der Ansprüche 1 bis 3,
**dadurch gekennzeichnet, dass** das Blockiermittel (70) eine Platte (74) ist, die an dem Unterteil (20) über ein in der Höhe bewegliches Mittel (75) befestigt ist.

6. Vorrichtung nach einem der Ansprüche 4 bis 5,
**dadurch gekennzeichnet, dass** die Platte (74) ein Dämpfungsmittel (76) aufweist.

7. Vorrichtung nach einem der Ansprüche 1 bis 6,
**dadurch gekennzeichnet, dass** das Erfassungsmittel (50) ein in der Höhe bewegliches Organ (51) aufweist, das mit mindestens einem Erfassungsfmger (53) versehen ist, sowie einerseits einem ersten Reiter (54), der mit dem ersten Gleitarm (21) im Lot ist, der durch Formschluss den ersten Schienengleiter (31) in der Offenstellung blockieren kann, und andererseits einen zweiten Reiter (55) aufweist, der mit dem zweiten Gleitarm (22) im Lot ist, der durch Formschluss den zweiten Schienengleiter (32) in der Offenstellung blockieren kann.

8. Vorrichtung nach Anspruch 7,
**dadurch gekennzeichnet, dass** der erste Reiter (54) mit dem zweiten Reiter (55) über zwei seitliche Längsverstrebungen (56) verbunden ist, wobei der Erfassungsfinger (53) gegenüber einer seitlichen Verstrebung (56) nach oben vorsteht und mit einer Führung (24) des Unterteils (20) zusammenwirkt.

9. Vorrichtung nach einem der Ansprüche 7 bis 8,
**dadurch gekennzeichnet, dass** das Erfassungsmittel (50) mindestens ein elastisches Organ (56') aufweist, welches mit dem beweglichen Organ (51) zusammenwirkt, was darauf abzielt, jeden Reiter (54, 55) einem der Gleitarme (21, 22) anzunähern.

10. Vorrichtung nach Anspruch 9,
**dadurch gekennzeichnet, dass** das elastische Organ (56') zwischen dem beweglichen Organ (51) und einem Halteorgan (25), das an dem Unterteil (20) befestigt ist, angeordnet ist.

11. Vorrichtung nach einem der Ansprüche 1 bis 10,
**dadurch gekennzeichnet, dass** jeder Gleitarm (21, 22) ein Stoppermittel (21', 22') des zugehörigen Schienengleiters (31, 32) aufweist.

12. Vorrichtung nach einem der Ansprüche 1 bis 11,
**dadurch gekennzeichnet, dass** sie ein Führungsmittel (80) des Unterteils (20) aufweist, das an der Schiene (4) befestigt werden kann, um das Unterteil (20) aus einem ersten Befestigungsbereich in einen zweiten Befestigungsbereich zu bewegen.

13. Sitz (2) mit mindestens einem Fuß (3),
**dadurch gekennzeichnet, dass** der Fuß (3) eine Befestigungsvorrichtung (10) nach einem der vorstehenden Ansprüche aufweist.

14. Fahrzeug (1) **dadurch gekennzeichnet, dass** es einen Sitz (2) aufweist, der an einer Schiene (4) über mindestens ein Befestigungsmittel (10) nach einem der Ansprüche 1 bis 13 befestigt ist.

## Claims

1. Fastening device (10) for fastening a load to a rail (4) provided with a slideway (4') delimited by a bottom wall (5), two side walls (6) and a top wall (7) comprising a succession of wide slots (8) and of narrow slots (9), said fastening device (10) comprising a base (20) and two shoes (30) suitable for being inserted in said wide slots (8) and for co-operating with the top wall (7) by shape interference at a narrow slot (9), said fastening device having:
- a first slide (31) and a second slide (32), each slide (31, 32) comprising one of said two shoes (30) for blocking said fastening device (10) in elevation by shape interference with said top wall (7),
- a spacing means (40) for spacing said first and second slides (31, 32) to move said first and second slides (31, 32) longitudinally in opposite directions (S1, S2),
- a bringing-closer means (60) for bringing closer said first and second slides (31, 32) to move each slide (31, 32) from the locking position to the opening position, and
- a blocking means (70) for longitudinally blocking said base (20),
**characterised in that** it comprises:
- a first slide shaft (21) and a second slide shaft (22) of said base, the first slide (31) and the second slide (32) being arranged respectively on the first slide shaft (21) and the second slide shaft (22) of said base (20),
- a detecting means (50) for detecting a rail (4) automatically controlling the spacing means (40) to move each slide (31, 32) from an opening position for which a wide slot (8) is vertically in line with said slide (31, 32) to a locking position for which a narrow slot (9) is vertically in line with said slide (31, 32).

2. Device according to Claim 1, **characterised in that** said spacing means (40) is a flexible means (41, 42) interposed between the first slide (31) and the second slide (32).

3. Device according to any one of Claims 1 to 2, **characterised in that** said bringing-closer means (60) comprises a sheath (61) bearing against a first stop surface (35) of the first slide (31) and a cable (62) passing through said sheath (61) having an end stop (63) in contact against a second stop surface (36) of the second slide (32), said cable (62) being connected to an actuator (64).

4. Device according to any one of Claims 1 to 3, **characterised in that** said blocking means (70) is a soleplate (74) secured to said base (20).

5. Device according to any one of Claims 1 to 3, **characterised in that** said blocking means (70) is a soleplate (74) fastened to said base (20) by a means for mobility in elevation (75).

6. Device according to any one of Claims 4 to 5,
**characterised in that** said soleplate (74) comprises a damping means (76).

7. Device according to any one of Claims 1 to 6,
**characterised in that** said detecting means (50) comprises a movable member (51) movable in elevation provided with at least one detecting finger (53) and also on one side with a
first bridge (54) vertically in line with the first slide shaft (21) which is suitable for blocking the first slide (31) in the open position by shape interference, and on the other side with a second bridge (55) vertically in line with the second slide shaft (22) which is suitable for blocking the second slide (32) in said open position by shape interference.

8. Device according to Claim 7,
**characterised in that** said first bridge (54) is connected to the second bridge (55) by two longitudinal side reinforcements (56), said detecting finger (53) projecting in elevation from a side reinforcement (56) and co-operating with a guide (24) of said base (20).

9. Device according to any one of Claims 7 to 8,
**characterised in that** said detecting means (50) comprises at least one flexible member (56') co-operating with said movable member (51) tending to bring each bridge (54, 55) closer to one of said slide shafts (21, 22).

10. Device according to Claim 9,
**characterised in that** said flexible member (56') is interposed between said movable member (51) and a support member (25) secured to the base (20).

11. Device according to any one of Claims 1 to 10,
**characterised in that** each slide shaft (21, 22) comprises a stop means (21', 22') for stopping the associated slide (31, 32).

12. Device according any one of Claims 1 to 11,
**characterised in that** it comprises a guide means (80) for guiding the base (20) suitable for being fastened to the rail (4) to move said base (20) from a first fastening zone to a second fastening zone.

13. Seat (2) provided with at least one leg (3),
**characterised in that** said leg (3) comprises a fastening device (10) according to any one of the preceding claims.

14. Vehicle (1),
**characterised in that** it comprises a seat (2) fastened to a rail (4) by at least one fastening device (10) according to any one of Claims 1 to 13.
